# EUROPÄISCHE PATENTSCHRIFT

(11) **EP 2 956 267 B1**
(45) Veröffentlichungstag und Bekanntmachung des Hinweises auf die Patenterteilung: **22.03.2017**
(21) Anmeldenummer: 14704126.3
(22) Anmeldetag: 11.02.2014
(51) Int. Cl.: B23D 59/00, B27F 5/02, B28D 1/04, B28D 7/00

(54) **VERFAHREN ZUR STEUERUNG EINES GERÄTESYSTEMS BEIM TRENNEN EINES WERKSTÜCKES ENTLANG EINER TRENNLINIE**
METHOD FOR CONTROLLING A TOOLING SYSTEM WHEN CUTTING A WORKPIECE ALONG A CUT LINE
PROCÉDÉ DE CONTRÔLE D'UN SYSTÈME D'OUTILS POUR LA COUPE D'UNE PIÈCE LE LONG D'UNE LIGNE DE COUPE

(30) Priorität: 14.02.2013 DE 102013202445
(43) Veröffentlichungstag der Anmeldung: 23.12.2015
(73) Patentinhaber: Hilti Aktiengesellschaft, 9494 Schaan (LI)
(72) Erfinder: BRUGGER, Peter, A-6800 Feldkirch (AT)
(74) Vertreter: Hilti Aktiengesellschaft Corporate Intellectual Property
(86) Internationale Anmeldenummer: PCT/EP2014/052620
(87) Internationale Veröffentlichungsnummer: WO 2014/124931

(56) Entgegenhaltungen:
- EP-A1- 1 693 173
- EP-A1- 2 607 003
- EP-A2- 2 181 788
- DE-A1- 19 823 756

## Beschreibung

### Technisches Gebiet

Die vorliegende Erfindung betrifft ein Verfahren zur Steuerung eines Gerätesystems beim Trennen eines Werkstückes entlang einer Trennlinie gemäß den Oberbegriffen der Ansprüche 1 bzw. 4.

### Stand der Technik

Bei manuellen Verfahren zum Trennen eines Werkstückes entlang einer Trennlinie muss der Bediener die Endpunkte der Trennlinie während der Bearbeitung durch eine manuelle Steuerung der motorischen Vorschubeinrichtung anfahren. Wenn das Sägeblatt von einem Sägeblattschutz umgeben ist, sind die Austrittspunkte des Sägeblattes im Werkstück für den Bediener schlecht oder überhaupt nicht sichtbar, so dass der Bediener die Endpunkte einer Trennlinie während der Bearbeitung nicht bestimmen kann.

Aus EP 1 693 173 A1 ist ein zumindest stückweise automatisiertes Verfahren zur Steuerung eines Gerätesystems beim Trennen eines Werkstückes entlang einer Trennlinie gemäß den Oberbegriffen der Ansprüche 1 bzw. 4 bekannt. Das Gerätesystem besteht aus einer Führungsschiene, einem an der Führungsschiene verschiebbar angeordneten Sägekopf und einer motorischen Vorschubeinrichtung zum Verschieben des Sägekopfes entlang der Führungsschiene. Der Sägekopf umfasst ein Sägeblatt, das an einem Sägearm befestigt ist und um eine Drehachse angetrieben wird. Der Sägearm ist um eine Schwenkachse schwenkbar ausgebildet. Durch eine Schwenkbewegung des Sägearms um die Schwenkachse wird die Schnitttiefe des Sägeblattes im Werkstück verändert. Die Drehung des Sägeblattes um die Drehachse erfolgt über einen Antriebsmotor und die Schwenkbewegung des Sägearms erfolgt über einen Schwenkmotor. Der Antriebsmotor und der Schwenkmotor sind in einem Gerätegehäuse des Sägekopfes angeordnet. Die motorische Vorschubeinrichtung umfasst einen Führungsschlitten und einen Vorschubmotor, der im Gerätegehäuse des Sägekopfes angeordnet ist. Der Sägekopf ist auf dem Führungsschlitten angebracht und über den Vorschubmotor entlang der Führungsschiene in einer Vorschubrichtung verschiebbar ausgebildet. Im Gerätegehäuse ist neben den Motoren eine Kontrolleinrichtung zur Steuerung des Sägekopfes und der motorischen Vorschubeinrichtung vorgesehen.

Das bekannte Verfahren zur Steuerung des Gerätesystems beim Trennen eines Werkstückes weist eine Folge von drei Verfahrensschritten auf, die nacheinander ausgeführt werden. Im ersten Verfahrensschritt wird der Sägearm um einen Schwenkwinkel geneigt, der der Schnitttiefe des Teilschnittes entspricht. Im zweiten Verfahrensschritt wird der Sägekopf längs der Führungsschiene entlang der Vorschubrichtung in einer Hinrichtung bis zum ersten Endpunkt der Trennlinie verschoben. Im dritten Verfahrensschnitt wird der Sägekopf längs der Führungsschiene in einer Rückrichtung entlang der Vorschubrichtung bis zum zweiten Endpunkt der Trennlinie verschoben. Die drei Verfahrensschritte werden solange wiederholt, bis die gewünschte Schnitttiefe des Trennschnittes erreicht ist. Das zumindest stückweise automatisierte Verfahren erfordert die Eingabe der Endpunkte der Trennlinie durch den Bediener, enthält aber keine Informationen, wie die Koordinaten der Endpunkte vom Bediener festgelegt werden.

### Darstellung der Erfindung

Die Aufgabe der vorliegenden Erfindung besteht in der Entwicklung eines Verfahrens zur Steuerung eines Gerätesystems beim Trennen eines Werkstückes entlang einer Trennlinie, bei dem die Bestimmung der Endpunkte für den Bediener vereinfacht ist.

Diese Aufgabe wird bei dem eingangs genannten Verfahren zur Steuerung eines Gerätesystems beim Trennen eines Werkstückes entlang einer Trennlinie erfindungsgemäß durch die Merkmale der unabhängigen Ansprüche 1 und 4 gelöst. Vorteilhafte Weiterbildungen sind in den abhängigen Ansprüchen angegeben.

In der Variante gemäß dem unabhängigen Anspruch 1 wird der Sägekopf auf der Führungsschiene in einer Startposition angeordnet und eine erste Teillänge von der Startposition bis zum ersten Endpunkt der Trennlinie wird vom Bediener über eine Steuerungseinrichtung des Gerätesystems eingegeben. Der Bediener kann den Sägekopf in einer beliebigen Startposition zwischen dem ersten und zweiten Endpunkt der Trennlinie auf der Führungsschiene anordnen. Die Berechnung der Koordinaten des ersten Endpunktes erfolgt in einer Kontrolleinrichtung des Gerätesystems aus der ersten Teillänge. Dabei umfasst die erste Teillänge neben dem Betrag die Richtung, in der die erste Teillänge ausgehend von der Startposition gemessen wird.

Als Startposition eignet sich bei einem schwenkbaren Sägearm beispielsweise die Position der Schwenkachse des Sägearms, da die Position der Schwenkachse in Vorschubrichtung während der Schwenkbewegung unverändert bleibt. Die Startposition sowie eine positive und negative Richtung ausgehend von der Startposition werden durch eine Markierung am Sägekopf angezeigt. Der Bediener misst den Abstand von der Startposition bis zum ersten Endpunkt und gibt den Betrag zusammen mit der Richtung, in der die erste Teillänge gemessen wird, ein.

In einer bevorzugten Variante wird eine zweite Teillänge von der Startposition bis zu einem zweiten Endpunkt der Trennlinie eingegeben. Dabei umfasst die zweite Teillänge neben dem Betrag die Richtung, in der die zweite Teillänge ausgehend von der Startposition gemessen wird. Aus der ersten und zweiten Teillänge (Betrag und Richtung) werden in der Kontrolleinrichtung des Gerätesystems die Positionen der Endpunkte der Trennlinie berechnet. Die Eingabe der zweiten Teillänge ist vorteilhaft, wenn die Gesamtlänge des Trennschnittes nicht durch die Bearbeitungsaufgabe festgelegt ist und die Messung der Gesamtlänge einen höheren Messaufwand erfordert.

In einer bevorzugten Ausführung wird die zweite Teillänge der Trennlinie vom Bediener über eine Steuerungseinrichtung eingegeben. Die manuelle Eingabe der Längen hat den Vorteil, dass jedes Messgerät zur Distanzmessung vom Bediener eingesetzt werden kann.

In der Variante gemäß dem unabhängigen Anspruch 4 werden die erste Teillänge von der Startposition bis zum ersten Endpunkt der Trennlinie sowie eine zweite Teillänge eingegeben, wobei die zweite Teillänge die Länge von der Startposition bis zu einem zweiten Endpunkt der Trennlinie ist. In einer bevorzugten Ausführung des Verfahrens gemäß Anspruch 4 wird die zweite Teillänge vom Bediener über eine Steuerungseinrichtung eingegeben. Die manuelle Eingabe der Längen hat den Vorteil, dass jedes Messgerät zur Distanzmessung vom Bediener eingesetzt werden kann.

In einer alternativen bevorzugten Ausführung des Verfahrens gemäß Anspruch 4 werden die erste Teillänge und/oder die zweite Teillänge der Trennlinie von einer Sensoreinrichtung zur Distanzmessung eingegeben. Die Verwendung einer Sensoreinrichtung hat den Vorteil, dass die gemessenen Längen direkt von der Sensoreinrichtung an die Kontrolleinrichtung des Gerätesystems übertragen werden können, wodurch das Risiko einer fehlerhaften Übertragung reduziert ist.

Besonders bevorzugt werden die erste Teillänge und/oder die zweite Teillänge der Trennlinie über eine Kommunikationsverbindung von der Sensoreinrichtung an das Gerätesystem übertragen. Der Bediener misst eine oder mehrere der Längen mittels der Sensoreinrichtung und stellt eine Kommunikationsverbindung zwischen der Sensoreinrichtung und der Kontrolleinrichtung des Gerätesystems her. Da die Übertragung der Längen
über eine Kommunikationsverbindung erfolgt, kann die Sensoreinrichtung an mehreren Gerätesystemen eingesetzt werden.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: ein schienengeführtes Gerätesystem bestehend aus einer Führungsschiene, einem an der Führungsschiene verschiebbar angeordneten Sägekopf und einer motorischen Vorschubeinrichtung zum Verschieben des Sägekopfes entlang der Führungsschiene;
- FIG. 2: das Gerätesystem der FIG. 1 beim Erstellen eines Trennschnittes zwischen einem ersten und zweiten Endpunkt ohne Überschnitte; und
- FIG. 3: das Gerätesystem der FIG. 1 beim Erstellen eines Trennschnittes zwischen einem ersten und zweiten Endpunkt mit Überschnitten.

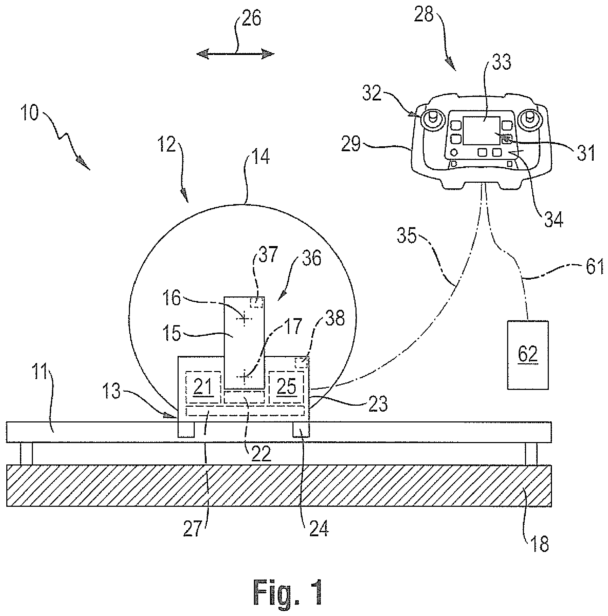

**FIG. 1** zeigt ein schienengeführtes Gerätesystem **10** bestehend aus einer Führungsschiene **11,** einem an der Führungsschiene 11 verschiebbar angeordneten Werkzeuggerät **12** und einer motorischen Vorschubeinrichtung **13** zum Verschieben des Werkzeuggerätes 12 entlang der Führungsschiene 11 in einer schematischen Darstellung.

Das Werkzeuggerät ist als Sägekopf 12 ausgebildet und umfasst ein Sägeblatt **14,** das an einem Sägearm **15** befestigt ist und um eine Drehachse **16** angetrieben wird. Der Sägearm 15 ist um eine Schwenkachse **17** schwenkbar ausgebildet. Durch eine Schwenkbewegung des Sägearms 15 um die Schwenkachse 17 wird die Schnitttiefe des Sägeblattes 14 verändert. Der Schwenkwinkel des Sägearms 15 bestimmt mit dem Durchmesser des Sägeblattes 14, wie tief das Sägeblatt 14 in ein zu bearbeitendes Werkstück **18** eintaucht. Alternativ zur Schwenkbewegung des Sägearms 15 um die Schwenkachse 17 kann der Sägearm 15 beispielsweise mit Hilfe eines Linearantriebes oder einer sonstigen Antriebseinrichtung verstellt werden. Zum Schutz des Bedieners kann das Sägeblatt 14 von einem Sägeblattschutz umgeben sein, der mittels eines Blattschutzhalters am Sägearm 15 befestigt wird.

Die Drehung des Sägeblattes 14 um die Drehachse 16 erfolgt über einen Antriebsmotor **21** und die Schwenkbewegung des Sägearms 15 um die Schwenkachse 17 erfolgt über einen Schwenkmotor **22.** Der Antriebsmotor 21 und der Schwenkmotor 22 sind in einem Gerätegehäuse **23** des Sägekopfes 12 angeordnet. Die motorische Vorschubeinrichtung 13 umfasst einen Führungsschlitten **24** und einen Vorschubmotor **25,** der im Gerätegehäuse 23 angeordnet ist. Der Sägekopf 12 ist auf dem Führungsschlitten 24 befestigt und über den Vorschubmotor 25 entlang der Führungsschiene 11 in einer Vorschubrichtung **26** verschiebbar ausgebildet. Im Gerätegehäuse 23 ist neben den Motoren 21, 22, 25 eine erste Kontrolleinrichtung **27** zur Steuerung des Sägekopfes 12 und der motorischen Vorschubeinrichtung 13 angeordnet.

Die Bedienung des Gerätesystems 10 erfolgt über eine Steuerungseinrichtung **28,** die in der gezeigten Ausführungsform der FIG. 1 als Fernsteuerungseinrichtung ausgebildet ist. Die Fernsteuerungseinrichtung 28 umfasst ein Gerätegehäuse **29,** eine im Gerätegehäuse 29 angeordnete zweite Kontrolleinrichtung **31** sowie eine Bedienungseinrichtung **32** und eine Anzeigeeinrichtung **33,** die auf einer Oberseite **34** des Gerätegehäuses 29 angeordnet sind. Die zweite Kontrolleinrichtung 31 ist über eine Kommunikationsverbindung **35** mit der ersten Kontrolleinrichtung 27 verbunden. Die Kommunikationsverbindung 35 ist als Kabelverbindung oder als kabellose Kommunikationsverbindung, beispielsweise in Form einer Infrarot-, Bluetooth-, WLAN- oder Wi-Fi-Verbindung, ausgebildet. Neben den aufgeführten, kabellosen Verbindungstechnologien eignen sich sämtliche bereits bekannten und zukünftigen kabellosen Verbindungstechnologien zur Datenübertragung.

Zur Überwachung des Gerätesystems 10 und des Bearbeitungsprozesses weist das Gerätesystem 10 eine Sensoreinrichtung **36** mit mehreren Sensorelementen auf. Ein erstes Sensorelement **37** ist als Schwenkwinkelsensor und ein zweites Sensorelement **38** als Wegsensor ausgebildet. Der Schwenkwinkelsensor 37 misst den momentanen Schwenkwinkel des Sägearms 15. Der Schwenkwinkel des Sägearms 15 bestimmt mit dem Durchmesser des Sägeblattes 14, wie tief das Sägeblatt 14 in das Werkstück 18 eintaucht. Der Wegsensor 38 misst die aktuelle Position des Sägekopfes 12 auf der Führungsschiene 11. Die Messgrößen werden vom Schwenkwinkelsensor 37 und Wegsensor 38 an die erste Kontrolleinrichtung 27 übermittelt.

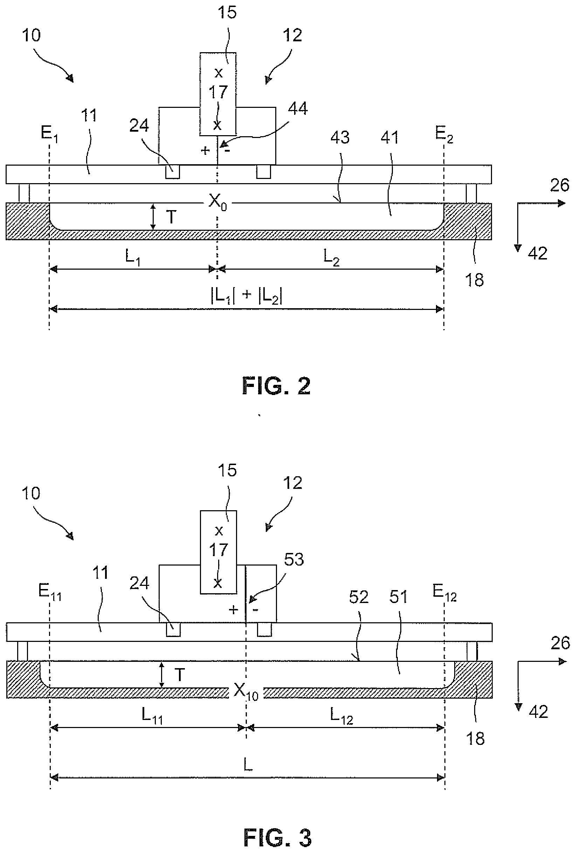

**FIG. 2** zeigt das Gerätesystem 10 der FIG. 1 in einer ersten Variante. Mit Hilfe des Gerätesystems 10 wird im Werkstück 18 ein Trennschnitt **41** erzeugt. Der Trennschnitt 41 weist in einer Tiefenrichtung **42** eine Schnitttiefe T auf und verläuft in Vorschubrichtung 26 entlang einer Trennlinie **43** zwischen einem ersten Endpunkt **E₁** und einem zweiten Endpunkt **E₂**. Der Trennschnitt 41 wird in mehreren Teilschnitten erstellt, bis die gewünschte Schnitttiefe T erreicht ist. Bei dem in FIG. 2 dargestellten Trennschnitt 41 ist an den Endpunkten E₁, E₂ kein Überschnitt möglich, so dass die Tiefe des Trennschnittes 41 an den Endpunkten E₁, E₂ kleiner als die Schnitttiefe T ist.

Der Sägekopf 12 wird mittels des Führungsschlittens 24 in einer Startposition **X₀** auf der Führungsschiene 11 positioniert. Die Startposition X₀ des Sägekopfes 12 liegt zwischen dem ersten und zweiten Endpunkt E₁, E₂ der Trennlinie 43 und ist durch die Position der Schwenkachse 17 des Sägearms 15 bestimmt. Die Position der Schwenkachse 17 in Vorschubrichtung 26 bleibt während der Schwenkbewegung des Sägearms 15 um die Schwenkachse 17 unverändert. Die Startposition X₀ sowie eine positive und negative Richtung ausgehend von der Startposition X₁₀ werden durch eine Markierung **44** angezeigt.

Die Positionen des ersten und zweiten Endpunktes E₁, E₂ in Vorschubrichtung 26 werden durch Eingabe von Teillängen festgelegt. Der Abstand zwischen der Startposition X₀ und dem ersten Endpunkt E₁ bestimmt eine erste Teillänge L₁ und der Abstand zwischen der Startposition X₀ und dem zweiten Endpunkt E₂ bestimmt eine zweite Teillänge L₂. Entsprechend der Markierung 44 wird die erste Teillänge L₁ in die positive Richtung und die zweite Teillänge L₂ in die negative Richtung gemessen. Der Bediener misst die erste und zweite Teillänge L₁, L₂ aus und gibt die gemessenen Teillängen L₁, L₂ zusammen mit den Richtungen der Teillängen über die Bedienungseinrichtung 32 in die Fernsteuerungseinrichtung 28 ein. Neben den Teillängen L₁, L₂ gibt der Bediener die gewünschte Schnitttiefe T des Trennschnittes 41 und Geräteparameter, wie beispielsweise den Durchmesser des Sägeblattes 14 und das zu bearbeitende Werkstück, in die Fernsteuerungseinrichtung 28 ein. Außerdem legt der Bediener fest, ob an einem der Endpunkte E₁, E₂, an beiden Endpunkten E₁, E₂ oder an keinem der Endpunkte E₁, E₂ ein Überschnitt erfolgen soll. In der ersten oder zweiten Kontrolleinrichtung 27, 31 werden aus den Teillängen L₁, L₂, den Geräteparametern und sonstigen Informationen Steuerbefehle zur Ausführung des Trennschnittes 41 erzeugt. Der Trennschnitt 41 wird in mehreren, aufeinander folgenden Teilschnitten im Werkstück 18 erstellt, bis die gewünschte Schnitttiefe T erreicht ist.

FIG. 3 zeigt das Gerätesystem 10 der FIG. 1 in einer zweiten Variante. Mit Hilfe des Gerätesystems 10 wird im Werkstück 18 ein Trennschnitt **51** erzeugt. Der Trennschnitt 51 weist in der Tiefenrichtung 42 die Schnitttiefe T auf und verläuft in Vorschubrichtung 26 entlang einer Trennlinie **52** zwischen einem ersten Endpunkt **E₁₁** und einem zweiten Endpunkt **E₁₂**. Die Endpunkte E₁₁, E₁₂ der FIG. 3 unterscheiden sich von den Endpunkten E₁, E₂ der FIG. 2 dadurch, dass Überschnitte erlaubt sind und der Trennschnitt 51 an den Endpunkten E₁₁, E₁₂ die Schnitttiefe T erreicht.

Der Sägekopf 12 wird mittels des Führungsschlittens 24 in einer Startposition **X₁₀** auf der Führungsschiene 11 positioniert. Die Startposition X₁₀ des Sägekopfes 12 liegt zwischen dem ersten und zweiten Endpunkt E₁₁, E₁₂ und ist durch eine Markierung **53** auf dem Gerätegehäuse 23 des Sägekopfes 12 bestimmt. Die Markierung 53 zeigt die Startposition X₁₀ sowie eine positive Richtung und eine negative Richtung ausgehend von der Startposition X₁₀ an.

Die Positionen der Endpunkte E₁₁, E₁₂ in Vorschubrichtung 26 werden durch Eingabe einer Teillänge (Betrag und Richtung) und einer Gesamtlänge festgelegt. Der Abstand zwischen der Startposition X₀ und dem ersten Endpunkt E₁₁ bestimmt eine erste Teillänge **L₁₁** und der Abstand zwischen dem ersten und zweiten Endpunkt E₁₁, E₁₂ bestimmt eine Gesamtlänge **L.** Aus der ersten Teillänge L₁₁, der Richtung, in der die erste Teillänge L₁ gemessen wird, und der Gesamtlänge L werden in der ersten oder zweiten Kontrolleinrichtung 27, 31 die Positionen der Endpunkte E₁₁, E₁₂ berechnet. Anstatt der Gesamtlänge L kann der Bediener eine zweite Teillänge L₁₂ (Betrag und Richtung) zwischen der Startposition X₁₀ und dem zweiten Endpunkt E₁₂ eingeben. Die Gesamtlänge L des Trennschnittes 51 ergibt sich als Summe aus den Beträgen der ersten und zweiten Teillänge |L₁₁| + |L₁₂|. Die Eingabe der Gesamtlänge L bietet sich an, wenn die Gesamtlänge L des Trennschnittes 51 festgelegt ist, beispielsweise bei einem Mauerdurchbruch für eine Tür mit einer Höhe von 2,30 m. Ist die Gesamtlänge L bekannt, muss nur eine Teillänge zwischen der Startposition X₁₀ des Sägekopfes 12 und einem der Endpunkte E₁₁, E₁₂ gemessen werden.

Die Teillängen L₁₁, L₁₂ oder die Gesamtlänge L des Trennschnittes 51 können vom Bediener manuell über die Bedienungseinrichtung 32 eingegeben werden. Alternativ kann das Gerätesystem 10 über eine Kommunikationsverbindung **61** mit einer Sensoreinrichtung **62** zur Distanzmessung verbunden sein (siehe FIG. 1). Der Bediener misst eine der Längen mittels der Sensoreinrichtung 62 und die gemessene Länge wird über die Kommunikationsverbindung 61 an die erste oder zweite Kontrolleinrichtung 27, 31 des Gerätesystems 10 übertragen. Bei der Ausführungsform der FIG. 1 ist die Sensoreinrichtung 62 über die Kommunikationsverbindung 61 mit der zweiten Kontrolleinrichtung 31 verbunden.

Für die Laserdistanzmessung muss an dem Endpunkt, dessen Länge gemessen werden soll, eine reflektierende und/oder streuende Fläche für den Laserstrahl vorhanden sein. Die Laserdistanzmessung kann durch ein aktives oder passives Zielobjekt unterstützt werden. In einer weiteren Variante kann die Sensoreinrichtung 62 zur Distanzmessung in das Gerätesystem 10 integriert sein.

## Patentansprüche

1. Verfahren zur Steuerung eines Gerätesystems (10) beim Trennen eines Werkstückes (18) entlang einer Trennlinie (43; 52) bis zu einem ersten Endpunkt (E₁; E₁₁) mit einem Sägekopf (12), der auf einer Führungsschiene (11) entlang einer Vorschubrichtung (26) verstellbar ist, wobei:
▪ der Sägekopf (12) auf der Führungsschiene (11) in einer Startposition (X₀; X₁₀) angeordnet wird und
▪ eine erste Teillänge (L₁; L₁₁) von der Startposition (X₀; X₁₀) bis zum ersten Endpunkt (E₁; E₁₁) der Trennlinie (43; 52) eingegeben wird,
**dadurch gekennzeichnet, dass** die erste Teillänge (L₁; L₁₁) vom Bediener über eine Steuerungseinrichtung (28) des Gerätesystems (10) eingegeben wird.

2. Verfahren nach Anspruch 1, **dadurch gekennzeichnet, dass** eine zweite Teillänge (L₂; L₁₂) von der Startposition (X₀; X₁₀) bis zu einem zweiten Endpunkt (E₂; E₁₂) der Trennlinie (43; 52) eingegeben wird.

3. Verfahren nach Anspruch 2, **dadurch gekennzeichnet, dass** die zweite Teillänge (L₂; L₁₂) vom Bediener über die Steuerungseinrichtung (28) eingegeben wird.

4. Verfahren zur Steuerung eines Gerätesystems (10) beim Trennen eines Werkstückes (18) entlang einer Trennlinie (43; 52) bis zu einem ersten Endpunkt (E₁; E₁₁) mit einem Sägekopf (12), der auf einer Führungsschiene (11) entlang einer Vorschubrichtung (26) verstellbar ist, wobei:
▪ der Sägekopf (12) auf der Führungsschiene (11) in einer Startposition (X₀; X₁₀) angeordnet wird und
▪ eine erste Teillänge (L₁; L₁₁) von der Startposition (X₀; X₁₀) bis zum ersten Endpunkt (E₁; E₁₁) der Trennlinie (43; 52) eingegeben wird,
**dadurch gekennzeichnet, dass** eine zweite Teillänge (L₂; L₁₂) von der Startposition (X₀; X₁₀) bis zu einem zweiten Endpunkt (E₂; E₁₂) der Trennlinie (43; 52) eingegeben wird.

5. Verfahren nach Anspruch 4, **dadurch gekennzeichnet, dass** die zweite Teillänge (L₂; L₁₂) der Trennlinie (43; 52) vom Bediener über eine Steuerungseinrichtung (28) des Gerätesystems (10) eingegeben wird.

6. Verfahren nach Anspruch 4, **dadurch gekennzeichnet, dass** die erste Teillänge (L₁; L₁₁) und/oder die zweite Teillänge (L₂; L₁₂) der Trennlinie (43; 52) von einer Sensoreinrichtung (62) zur Distanzmessung eingegeben werden.

7. Verfahren nach Anspruch 6, **dadurch gekennzeichnet, dass** die erste Teillänge (L₁; L₁₁) und/oder die zweite Teillänge (L₂; L₁₂) der Trennlinie (43; 52) über eine Kommunikationsverbindung (61) von der Sensoreinrichtung (62) an das Gerätesystem (10) übertragen werden.

## Claims

1. Method for controlling a tooling system (10) during cutting of a workpiece (18) along a cutting line (43; 52) up to a first end point (E₁; E₁₁) with a saw head (12), which may be adjusted on a guide rail (11) along a feed direction (26), in which:
▪ the saw head (12) is arranged on the guide rail (11) in a starting position (X₀; X₁₀) and
▪ a first partial length (L₁; L₁₁) from the starting position (X₀; X₁₀) up to the first end point (E₁; E₁₁) of the cutting line (43; 52) is input,
**characterised in that** the first partial length (L₁; L₁₁) is input by the operator through a control device (28) of the tooling system (10).

2. Method according to claim 1, **characterised in that** a second partial length (L₂; L₁₂) from the starting position (X₀; X₁₀) up to a second end point (E₂; E₁₂) of the cutting line (43; 52) is input.

3. Method according to claim 2, **characterised in that** the second partial length (L₂; L₁₂) is input by the operator through the control device (28).

4. Method for controlling a tooling system (10) during cutting of a workpiece (18) along a cutting line (43; 52) up to a first end point (E₁, E₁₁) with a saw head (12), which may be adjusted on a guide rail (11) along a feed direction (26), in which:
▪ the saw head (12) is arranged on the guide rail (11) in a starting position (X₀; X₁₀) and
▪ a first partial length (L₁; L₁₁) from the starting position (X₀; X₁₀) up to the first end point (E₁; E₁₁) of the cutting line (43; 52) is input,
**characterised in that** a second partial length (L₂; L₁₂) from the starting position (X₀; X₁₀) up to a second end point (E₂; E₁₂) of the cutting line (43; 52) is input.

5. Method according to claim 4, **characterised in that** the second partial length (L₂; L₁₂) of the cutting line (43; 52) is input by the operator through a control device (28) of the tooling system (10).

6. Method according to claim 4, **characterised in that** the first partial length (L₁; L₁₁) and/or the second partial length (L₂; L₁₂) of the cutting line (43; 52) are input by a sensor device (62) for distance measuring.

7. Method according to claim 6, **characterised in that** the first partial length (L₁; L₁₁) and/or the second partial length (L₂; L₁₂) of the cutting line (43; 52) are transferred from the sensor device (62) to the tooling system (10) through a communication connection (61).

## Revendications

1. Procédé pour commander un système d'appareils (10) lors de la découpe d'une pièce (18) le long d'une ligne de coupe (43 ; 52) jusqu'à un premier point d'extrémité (E₁ ; E₁₁) en utilisant une tête de scie (12) qui est mobile sur un rail de guidage (11) le long d'une direction d'avance (26), lequel procédé comporte les étapes consistant à :
• agencer la tête de scie (12) sur le rail de guidage (11) dans une position de départ (X₀ ; X₁₀) et
• entrer une première longueur partielle (L₁ ; L₁₁) de la position de départ (X₀ ; X₁₀) jusqu'au premier point d'extrémité (E₁ ; E₁₁) de la ligne de coupe (43 ; 52),
**caractérisé en ce que** la première longueur partielle (L₁ ; L₁₁) est entrée par l'opérateur par l'intermédiaire d'une unité de commande (28) du système d'appareils (10).

2. Procédé selon la revendication 1, **caractérisé en ce qu'**une seconde longueur partielle (L₂ ; L₁₂) de la position de départ (X₀ ; X₁₀) jusqu'à un second point d'extrémité (E₂ ; E₁₂) de la ligne de coupe (43 ; 52) est entrée.

3. Procédé selon la revendication 2, **caractérisé en ce que** la seconde longueur partielle (L₂ ; L₁₂) est entrée par l'opérateur par l'intermédiaire de l'unité de commande (28).

4. Procédé pour commander un système d'appareils (10) lors de la découpe d'une pièce (18) le long d'une ligne de coupe (43 ; 52) jusqu'à un premier point d'extrémité (E₁ ; E₁₁) en utilisant une tête de scie (12) qui est mobile sur un rail de guidage (11) le long d'une direction d'avance (26), lequel procédé comporte les étapes consistant à :
• agencer la tête de scie (12) sur le rail de guidage (11) dans une position de départ (X₀ ; X₁₀) et
• entrer une première longueur partielle (L₁ ; L₁₁) de la position de départ (X₀ ; X₁₀) jusqu'au premier point d'extrémité (E₁ ; E₁₁) de la ligne de coupe (43 ; 52),
**caractérisé en ce qu'**une seconde longueur partielle (L₂ ; L₁₂) de la position de départ (X₀ ; X₁₀) jusqu'à un second point d'extrémité (E₂ ; E₁₂) de la ligne de coupe (43 ; 52) est entrée.

5. Procédé selon la revendication 4, **caractérisé en ce que** la seconde longueur partielle (L₂ ; L₁₂) de la ligne de coupe (43 ; 52) est entrée par l'opérateur par l'intermédiaire d'une unité de commande (28) du système d'appareils (10).

6. Procédé selon la revendication 4, **caractérisé en ce que** la première longueur partielle (L₁ ; L₁₁) et/ou la seconde longueur partielle (L₂ ; L₁₂) de la ligne de coupe (43 ; 52) sont entrée par des moyens de détection (62) pour une mesure de distance.

7. Procédé selon la revendication 6, **caractérisé en ce que** la première longueur partielle (L₁ ; L₁₁) et/ou la seconde longueur partielle (L₂ ; L₁₂) de la ligne de coupe (43 ; 52) sont transmises des moyens de détection (62) au système d'appareils (10) par l'intermédiaire d'une liaison de communication (61).
